# EUROPEAN PATENT SPECIFICATION

(11) **EP 0 339 730 B1**
(45) Date of publication and mention of the grant of the patent: **21.04.1993**
(21) Application number: 89201036.4
(22) Date of filing: 21.04.1989
(51) Int. Cl.: A01F 15/07

(54) **Round baler with variable bale chamber and sledge assembly**
Rundballenpresse mit variabler Kammer und Schleppvorrichtung
Presse à balles rondes avec chambre variable et ensemble presseur

(30) Priority: 27.04.1988 US 186984; 27.04.1988 US 186542
(43) Date of publication of application: 02.11.1989
(73) Proprietor: NEW HOLLAND BELGIUM N.V., B-8210 Zedelgem (BE)
(72) Inventor: Seymour, Shaun A., New Holland, PA 17557 (US); Jennings, Richard E., Manheim, PA 17545 (US); Potter, Wilburn H., Strasburg, PA 17579 (US)
(74) Representative: Vandenbroucke, Alberic

(56) References cited:
- EP-A- 0 161 726
- EP-A- 0 228 944
- FR-A- 2 460 099
- GB-A- 2 150 492

## Description

This invention relates generally to agricultural balers and, in particular, to such balers typically referred to as "round balers" which form cylindrical bales of crop material.

Three basic types of bale forming elements have been used in round balers. These are chain and slat aprons, belt aprons and rollers. Each type of bale forming element has advantages and disadvantages. For example, an advantage of chain and slat aprons is that they are capable of starting bale formation in almost all crop conditions but a disadvantage of these aprons is that they often form bales with rough outer surfaces. An advantage of belt aprons is that they form bales with smooth outer surfaces but a disadvantage of belt aprons is that they have bale starting problems in certain crop conditions. Rollers also have the advantage of forming bales with smooth outer surfaces but they have a disadvantage of resulting in losses of crop material through the gaps between adjacent rollers. EP-A-0.296.665 discloses a round baler utilizing a combination of bale forming rollers and a belt apron. In this round baler, the rollers are fixedly positioned and cooperate with the belt apron to define a generally D-shaped bale starting chamber. Said rollers form a front wall of the starting chamber, and the belt apron has an expandable course that forms a rear wall of the starting chamber. While the round baler disclosed in EP-A-0.296.665 functions adequately in hay and when making full size bales, it encounters problems operating in straw and silage and when making less than full size bales. For example, the D-shaped starting chamber results in the generation of fines and causes the less than full size bales to be out-of-round and have lower than desirable density and poor appearance.

EP-A-0.228.944 shows another round baler utilizing the combination of bale forming rollers and a belt apron. The rollers are mounted on a pair of sledge assemblies which are pivotally mounted at opposite sides of the bale chamber in respectively the main frame and the tailgate. Both assemblies comprise idler rollers which are disposed to engage with the belt apron so as to maintain this belt apron in close proximity with the adjacent rollers on the respective sledge assemblies. The belt apron becomes operative only after bale formation in the bale chamber has progressed to a certain extent; i.e. bale formation is started with the help of only the bale forming rollers on both sledge assemblies. However, this arrangement according to EP-A-0.228.944 is fairly complex in design due to the fact that, for controlling the respective positions of the belt apron and the sledge assemblies, resilient means are associated with as well this belt apron as each one of said sledge assemblies.

It is an object of the present invention to provide a round baler which incorporates as many advantages as possible of the three basic types of bale forming elements while minimizing the disadvantages thereof. It is also an object of the present invention to provide a round baler which overcomes the aforementioned problems encountered by the round baler disclosed in EP-A-0.296.665 as well as to greatly simplify the design of the baler when compared with the state-of-the-art illustrated in EP-A-0.228.944; said simplification having a positive effect on the production cost of the baler.

The present invention provides a round baler having :
- a main frame;
- a tailgate mounted on the main frame for pivotal movement between a closed, bale forming position and an opened, bale discharge position;
- a bale forming chamber expandable between bale starting and full bale positions;
- a floor roll rotatably mounted in the main frame generally at the bottom end of the bale forming chamber;
- apron means movably supported on drive means and a plurality of guide members which are rotatably mounted in the main frame and the tailgate; said apron means having an inner course which is expandable between bale starting and full bale positions;
- apron tensioning means operable to tension the apron means; to urge the apron inner course to its bale starting position when the bale chamber is empty and, to permit said apron inner course to expand to its full bale position upon a bale being formed in the bale chamber; and
- a sledge assembly mounted in the main frame for pivotal movement between an inner, bale starting position and an outer, full bale position; said sledge assembly carrying at least one roller extending transversely of the main frame and, at one end thereof, idler means engaging with the apron means and, said floor roll and said sledge assembly defining a bale chamber inlet throat therebetween; said baler being characterized in that : in the bale starting position, said bale forming chamber basically is in the shape of a generally upright triangle with the idler means being positioned generally at the apex thereof; with one of the generally upright edges thereof being defined by said at least one roller and, with the base thereof being defined, in part, by said floor roll;
- the apron inner course extends between said idler means and one of said guide members which, when the tailgate is in the closed position, is disposed adjacent the floor roll; the arrangement being such that, in the bale starting position, said apron inner course cooperates with the at least one roller of the sledge assembly to form the other generally upright edge of said basically triangular shape so as to delimit the bale starting chamber therebetween; and
- the apron means and the sledge assembly are operatively associated with each other in a manner so that the apron tensioning means are operable, through the intermediary of said apron means and when the bale chamber is empty, to urge the sledge assembly toward its bale starting position and, to permit said sledge assembly to expand toward its full bale position upon a bale being formed in the bale chamber.

In the preferred embodiment of the round baler, the sledge assembly comprises a plurality of rollers which cooperate with the apron inner course to define the bale starting chamber. The idler means engage the apron for maintaining the apron in close proximity to one roller of the plurality of rollers during movement of the sledge assembly between the bale starting and full bale positions. The apron inner course forms a rear wall of the bale starting chamber and the plurality of rollers forms a front wall of the bale starting chamber. The apron may comprise a plurality of belts supported on guide rolls which are rotatably mounted on the tailgate and on a drive roll which is rotatably mounted on the main frame.

A round baler embodying the present invention will now be described in greater detail by way of example with reference to the accompanying drawings, in which :
Fig. 1 is a side elevational view of a round baler according to the preferred embodiment of the present invention at the start of bale formation;
Fig. 2 is another side elevational view of the round baler of Fig. 1 at the completion of bale formation; and
Fig. 3 is a further side elevational view of the round baler of Fig. 1 during bale ejection.

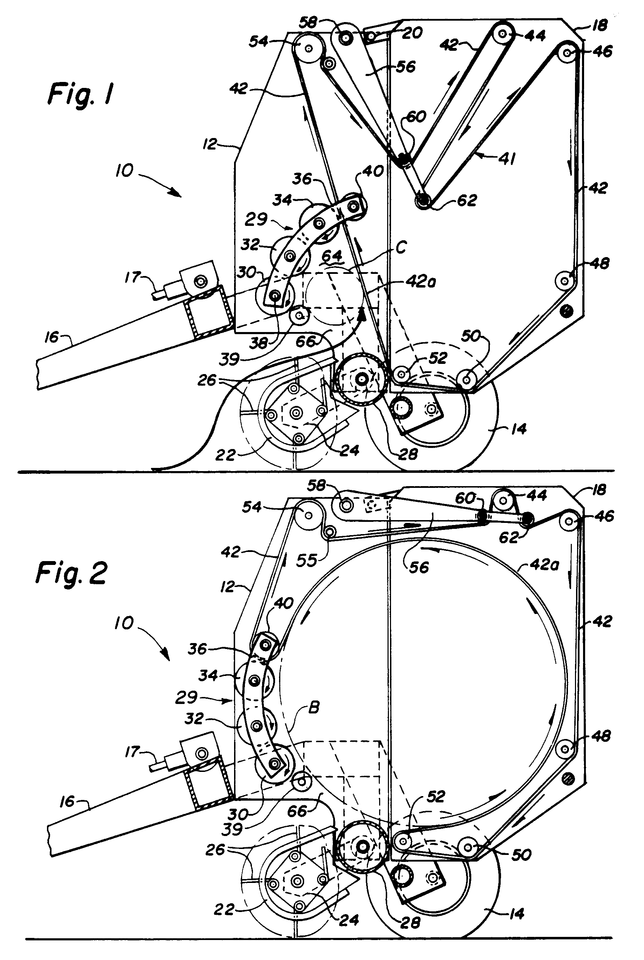

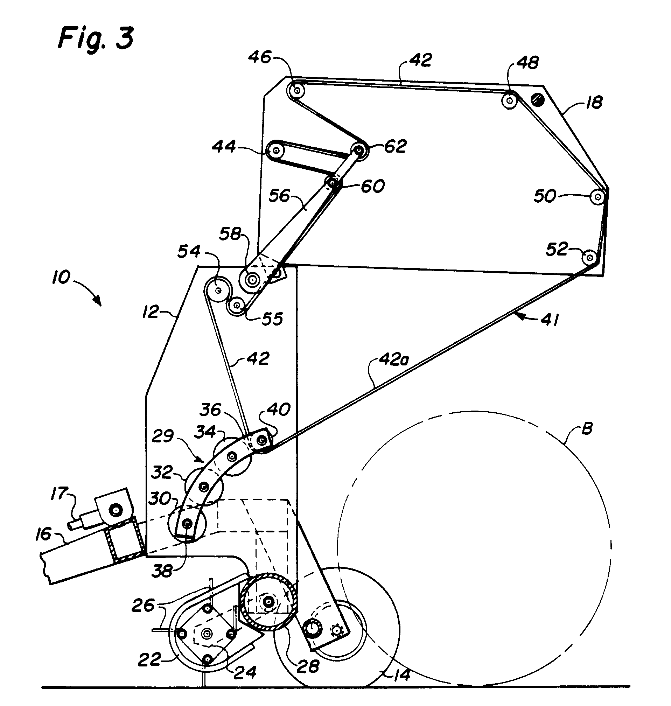

Referring to Figs. 1 and 2, a round baler 10 according to the preferred embodiment of the present invention includes a main frame 12 supported by a pair of wheels 14. A tongue 16 is provided on the forward portion of the main frame 12 for connection to a tractor (not shown). A tailgate 18 is pivotally connected to the main frame 12 by stub shafts 20 so that the tailgate 18 may be closed as shown in Fig. 1 and opened as shown in Fig. 3. A conventional pickup 22 is mounted on the main frame 12 by a pair of brackets 24 and is supported by a pair of wheels (not shown). The pickup 22 includes a plurality of fingers or tines 26 movable in a predetermined path to lift crop material from the ground and deliver it rearwardly toward a floor roll 28 which is rotatably mounted on the main frame 12.

In accordance with the present invention, a sledge assembly 29 includes a plurality of rollers 30, 32, 34 extending transversely of the main frame 12 in an arcuate arrangement and journalled at the ends thereof in a pair of arcuately shaped arms 36. The arms 36 are pivotally mounted inside the main frame 12 on stub shafts 38 for permitting movement of the sledge assembly 29 between a bale starting position shown in Fig. 1 and a full bale position shown in Fig. 2. The rollers 30, 32, 34 are driven in a clockwise direction as indicated in Fig. 1 by conventional means (for example, chains and sprockets or gears) connected with a drive shaft 17 which is adapted for connection to the PTO of a tractor (not shown). A stripper roll 39 is located adjacent roller 30 and is driven in a clockwise direction, as viewed in Fig. 1, to strip crop material from the roller 30. An idler roller 40 is carried by the arms 36 for movement in an arcuate path when the sledge assembly 29 moves between its bale starting and full bale positions. The idler roller 40 is freely rotatable.

An apron 41 includes a plurality of belts 42 supported on guide rolls 44, 46, 48, 50, 52 which are rotatably mounted in the tailgate 18 and on a drive roll 54 which is rotatably mounted in the main frame 12. Although the belts 42 pass between the roller 34 and the idler roller 40, they are in engagement with only the idler roller 40 but the roller 34 is located in close proximity to the belts 42 to strip crop material from the belts 42. Further conventional means (not shown) are connected with the drive shaft 17 to provide rotation of the drive roll 54 in a direction which causes movement of the belts 42 along the path indicated in Fig. 1 when starting a bale. An additional guide roll 55 in the main frame 12 ensures proper driving engagement between the belts 42 and the drive roll 54. Another pair of arms 56 are pivotally mounted on the main frame 12 by a cross shaft 58 for movement between inner and outer positions shown in Figs. 1 and 2, respectively. Arms 56 carry additional guide rolls 60 and 62 for the belts 42. Resilient means (not shown) are provided to normally urge the arms 56 toward their inner positions while resisting movement thereof from their inner positions to their outer positions.

When the round baler 10 is in the condition shown in Fig. 1 with the tailgate 18 closed, an inner course 42a of the apron belts 42 extending between the guide roll 52 and the idler roller 40 cooperates with the rollers 30, 32, 34 of the sledge assembly 29 to define a bale starting chamber 64. The apron inner course 42a forms a rear wall of the chamber 64 while the rollers 30, 32, 34 form a front wall of the chamber 64. The floor roll 28 is disposed in the bottom of the chamber 64 between the front and rear walls thereof. The roller 30 is spaced from the floor roll 28 to form a throat or inlet 66 for the chamber 64, and the arms 56 will be urged into their inner positions shown in Fig. 1.

As the round baler 10 is towed across a field by a tractor (not shown), the pickup tines 26 lift crop material from the ground and feed it into the bale starting chamber 64 via the throat 66. The crop material is carried rearwardly by the floor roll 28 into engagement with the apron inner course 42a which carries it upwardly and forwardly into engagement with the rollers 30, 32, 34. The crop material is coiled in a counterclockwise direction as viewed in Fig. 1 to start a bale core C. Continued feeding of crop material into the chamber 64 by the pickup tines 26 causes the apron inner course 42a of the belts 42 to expand in length around a portion of the bale core C as the diameter thereof increases. The arms 56 rotate from their inner position shown in Fig. 1 toward their outer position shown in Fig. 2 to permit such expansion of the apron inner course 42a. When a full sized bale B has been formed and then wrapped with a suitable material such as twine or net, the tailgate 18 is opened by conventional means (for example, hydraulic cylinders) and the bale B is ejected as shown in Fig. 3. Subsequent closing of the tailgate 18 returns the apron inner course 42a to the location shown in Fig. 1 since the arms 56 are returned to their inner position shown in Fig. 1. The round baler 10 is now ready to form another bale.

It will be understood that during formation of the bale B, sledge assembly 29 moves from its bale starting position of Fig. 1 to its full bale position of Fig. 2. This movement of the sledge assembly 29 causes the idler roller 40 to move in an arcuate path while maintaining the apron belts 42 in close proximity to the roller 34, thereby allowing the roller 34 to strip crop material from the apron belts 42. The idler roller 40 thus prevents the loss of crop material between the roller 34 and the belts 42 during formation of the bale B. The sledge assembly 29 is pushed outwardly toward its full bale position during bale formation and is pulled inwardly toward its bale starting position during bale ejection without utilizing any additional mechanisms.

In an alternative embodiment of the round baler 10, apron 41 consists of a pair of chains connected together at spaced intervals by transverse slats, and the idler roller 40 is replaced by a pair of idler sprockets engaged with the chains. Also in this alternative embodiment, the guide rolls 44, 46, 48, 50, 52, 55, 60 and 62 would be replaced with guide sprockets for engaging the apron chains, and the drive roll 54 would be replaced with drive sprockets.

## Claims

1. A round baler (10) having :
- a main frame (12);
- a tailgate (18) mounted on the main frame (12) for pivotal movement between a closed, bale forming position and an opened, bale discharge position;
- a bale forming chamber (64) expandable between bale starting and full bale positions;
- a floor roll (28) rotatably mounted in the main frame (12) generally at the bottom end of the bale forming chamber (64);
- apron means (41) movably supported on drive means (54) and a plurality of guide members (44, 46, 48, 50, 52) which are rotatably mounted in the main frame (12) and the tailgate (18); said apron means (41) having an inner course (42a) which is expandable between bale starting and full bale positions;
- apron tensioning means (56, 60, 62) operable to tension the apron means (41); to urge the apron inner course (42a) to its bale starting position when the bale chamber (64) is empty and, to permit said apron inner course (42a) to expand to its full bale position upon a bale (B) being formed in the bale chamber (64); and
- a sledge assembly (29) mounted in the main frame (12) for pivotal movement between an inner, bale starting position and an outer, full bale position; said sledge assembly (29) carrying at least one roller (30, 32, 34) extending transversely of the main frame (12) and, at one end thereof, idler means (40) engaging with the apron means (42) and, said floor roll (28) and said sledge assembly (29) defining a bale chamber inlet throat (66) therebetween; said baler (10) being characterized in that :
in the bale starting position, said bale forming chamber (64) basically is in the shape of a generally upright triangle with the idler means (40) being positioned generally at the apex thereof; with one of the generally upright edges thereof being defined by said at least one roller (30, 32, 34) and, with the base thereof being defined, in part, by said floor roll (28);
- the apron inner course (42a) extends between said idler means (40) and one of said guide members (52) which, when the tailgate (18) is in the closed position, is disposed adjacent the floor roll (28); the arrangement being such that, in the bale starting position, said apron inner course (42a) cooperates with the at least one roller (30, 32, 34) of the sledge assembly (29) to form the other generally upright edge of said basically triangular shape so as to delimit the bale starting chamber (64) therebetween; and
- the apron means (41) and the sledge assembly (29) are operatively associated with each other in a manner so that the apron tensioning means (56, 60, 62) are operable, through the intermediary of said apron means (41) and when the bale chamber (64) is empty, to urge the sledge assembly (29) toward its bale starting position and, to permit said sledge assembly (29) to expand toward its full bale position upon a bale (B) being formed in the bale chamber (64).

2. A round baler (10) according to claim 1, characterized in that the sledge assembly (29) carries a plurality of rotatable rollers (30, 32, 34) which cooperate with the apron inner course (42a) to delimit said bale chamber (64) therebetween.

3. A round baler (10) according to claim 1 or 2 characterized in that the idler means (40) are disposed to engage the apron means (41) in a manner so as to maintain, during movement of the sledge assembly (29) and the apron means (41) from the bale starting positions to the full bale positions and vice versa, said apron means (41) in close proximity to the at least one roller (30, 32, 34), respectively the adjacent one (34) of the plurality of rollers (30, 32, 34).

4. A round baler (10) according to claim 3, characterized in that the apron means (41) pass between, on the one hand, said idler means (40) and, on the other hand, said at least one roller (30, 32, 34), respectively said adjacent one (34) of said plurality of rollers (30, 32, 34).

5. A round baler (10) according to claim 3 or 4 when appended to claim 2, characterized in that the sledge assembly (29) comprises a pair of transversely spaced apart arms (36) which are pivotally mounted in the base frame (12) at or adjacent corresponding first ends and which rotatably carry said plurality of rollers (30, 32, 34) therebetween along the length thereof in a generally arcuate arrangement; said arms (36) carrying said idler means (40) at or adjacent the corresponding opposite ends.

6. A round baler (10) according to claim 5 characterized in that, during bale formation, the idler means (40) move in an arcuate, outwardly directed path entraining with them said apron means (41).

7. A round baler (10) according to any of the preceding claims, characterized in that the apron means (41) comprise a plurality of transversely spaced apart belts (42) supported on guide rolls (44, 46, 48, 50, 52) which are rotatably mounted on the tailgate (18) and on a drive roll (54) which is rotatably mounted on the main frame (12).

8. A round baler (10) according to claim 7, characterized in that the idler means is formed by a freely rotatable roller (40).

9. A round baler (10) according to any of the claims 1-6 characterized in that :
- the apron means (41) comprise a pair of transversely spaced apart chains which, at spaced intervals, are connected together by transverse slats; said chains being supported on guide sprockets which are rotatably mounted on the tailgate (18) and on drive sprockets which are rotatably mounted on the main frame (12), and
- the idler means (40) are formed by a pair of freely rotatable idler sprockets disposed on the sledge assembly (29) to be engaged by the apron chains.

## Patentansprüche

1. Rundballenpresse (10) mit:
- einem Hauptrahmen (12),
- einer an dem Hauptrahmen (12) für eine Schwenkbewegung zwischen einer geschlossenen Ballenformungsstellung und einer geöffneten Ballenauswurfstellung befestigten Heckklappe (18),
- einer Ballenformungskammer (64), die zwischen einer Ballenanfangsstellung und einer einem vollständigen Ballen entsprechenden Stellung ausdehnbar ist,
- einer Bodenwalze (28), die drehbar in dem Hauptrahmen (12) allgemein am bodenseitigen Ende der Ballenformungskammer (64) befestigt ist,
- Umschlingungseinrichtungen (41), die beweglich auf Antriebseinrichtungen (54) und einer Vielzahl von Führungsteilen (44,46,48,50,52) gehaltert sind, die drehbar in dem Hauptrahmen (12) und der Heckklappe (18) befestigt sind, wobei die Umschlingungseinrichtungen (41) einen inneren Strang (42a) aufweisen, der zwischen einer Ballenanfangsstellung und einer einem vollständigen Ballen entsprechenden Stellung ausdehnbar ist,
- Umschlingungs-Spanneinrichtungen (56,60,62), die betreibbar sind, um die Umschlingungseinrichtungen (41) zu spannen, um den inneren Strang (42a) der Umschlingung auf seine Ballenanfangsstellung zu drücken, wenn die Ballenkammer (64) leer ist und um es dem inneren Strang (42a) der Umschlingung zu ermöglichen, sich auf seine einem vollständigen Ballen entsprechende Stellung auszudehnen, wenn ein Ballen (B) in der Ballenkammer (64) geformt wird, und
- einer Schlittenbaugruppe (29), die in dem Hauptrahmen (12) für eine Schwenkbewegung zwischen einer inneren Ballenanfangsstellung und einer äußeren, einem vollständigen Ballen entsprechenden Stellung befestigt ist, wobei die Schlittenbaugruppe (29) zumindestens eine sich in Querrichtung des Hauptrahmens (12) erstreckende Walze (30,32,34) und an einem ihrer Enden eine Leerlaufeinrichtung (40) trägt, die mit den Umschlingungseinrichtungen (42) in Eingriff steht, und wobei die Bodenwalze (28) und die Schlittenbaugruppe (29) zwischen sich eine Ballenkammer-Einlaßmündung (66) bilden,
wobei die Ballenpresse (10) dadurch gekennzeichnet ist, daß
- die Ballenformungskammer (64) in der Ballenanfangsstellung grundlegend die Form eines allgemein aufrechtstehenden Dreieckes aufweist, wobei die Leerlaufeinrichtung (40) allgemein an der Spitze des Dreieckes angeordnet ist, während eine der allgemein aufrechtstehenden Kanten durch die zumindestens eine Walze (30,32,34) gebildet ist, während die Basis des Dreieckes teilweise durch die Bodenwalze (28) gebildet ist,
- der innere Strang (42a) der Umschlingung sich zwischen der Leerlaufeinrichtung (40) und einem der Führungsteile (52) erstreckt, das bei sich in der geschlossenen Stellung befindlicher Heckklappe (18) benachbart zu der Bodenwalze (28) angeordnet ist, wobei die Anordnung derart ist, daß in der Ballenanfangsstellung der innere Strang (42a) der Umschlingung mit der zumindestens einen Walze (30,32,34) der Schlittenbaugruppe (29) zusammenwirkt, um die andere allgemein aufrechtstehende Kante der grundlegenden dreieckigen Form zu bilden, so daß die Ballenanfangskammer (64) zwischen diesen Teilen umgrenzt wird, und
- die Umschlingungseinrichtungen (41) und die Schlittenbaugruppe (29) einander betriebsmäßig derart zugeordnet sind, daß die Umschlingungs-Spanneinrichtungen (56, 60,62) über die Umschlingungseinrichtungen (42) und bei leerer Ballenkammer (64) derart betreibbar sind, daß sie die Schlittenbaugruppe (29) in Richtung auf die Ballenanfangsstellung drücken und es der Schlittenbaugruppe (29) ermöglichen, sich in Richtung auf ihre einem vollständigen Ballen entsprechende Stellung auszudehnen, wenn ein Ballen (B) in der Ballenkammer (64) geformt wird.

2. Rundballenpresse (10) nach Anspruch 1,
dadurch gekennzeichnet, daß die Schlittenbaugruppe (29) eine Anzahl von drehbaren Walzen (30,32,34) trägt, die mit dem inneren Strang (42a) der Umschlingung zusammenwirken, um zwischen sich die Ballenkammer (64) zu umgrenzen.

3. Rundballenpresse (10) nach Anspruch 1 oder 2,
dadurch gekennzeichnet, daß die Leerlaufeinrichtung (40) so angeordnet ist, daß sie mit den Umschlingungseinrichtungen (41) derart in Eingriff kommt, daß sie während der Bewegung der Schlittenbaugruppe (29) und der Umschlingungseinrichtungen (41) von der Ballenanfangsstellung zu der einem vollständigen Ballen entsprechenden Stellung und umgekehrt die Umschlingungseinrichtungen (41) eng benachbart zu der zumindestens einen Walze (30,32,34) bzw. zu der benachbarten (34) der Anzahl von Walzen (30,32,34) hält.

4. Rundballenpresse (10) nach Anspruch 3,
dadurch gekennzeichnet, daß die Umschlingungseinrichtungen (41) zwischen der Leerlaufeinrichtung (40) einerseits und der zumindestens einen Walze (30,32,34) bzw. der benachbarten (34) der Anzahl von Walzen (30,32,34) andererseits hindurchlaufen.

5. Rundballenpresse (10) nach Anspruch 3 oder 4 unter Rückbeziehung auf Anspruch 2,
dadurch gekennzeichnet, daß die Schlittenbaugruppe (29) zwei mit Querabstand angeordnete Arme (36) umfaßt, die schwenkbar in dem Hauptrahmen (12) an oder benachbart zu entsprechenden ersten Enden befestigt sind und die die Anzahl von Walzen (30,32,34) zwischen sich entlang ihrer Länge in einer allgemein bogenförmigen Anordnung tragen, wobei die Arme (36) die Leerlaufeinrichtung (40) an oder benachbart zu ihren entsprechenden entgegengesetzten Enden tragen.

6. Rundballenpresse (10) nach Anspruch 5,
dadurch gekennzeichnet, daß sich die Leerlaufeinrichtung (40) während der Ballenformung auf einer bogenförmigen, nach außen gerichteten Bahn bewegen und die Umschlingungseinrichtungen (41) mit sich zieht.

7. Rundballenpresse (10) nach einem der vorhergehenden Ansprüche,
dadurch gekennzeichnet, daß die Umschlingungseinrichtungen (41) eine Anzahl von mit Querabstand angeordneten Riemen (42) umfassen, die auf drehbar an der Heckklappe (18) befestigten Führungswalzen (44,46,48,50,52) und auf einer Antriebswalze (54) gehaltert sind, die drehbar auf dem Hauptrahmen (12) befestigt ist.

8. Rundballenpresse (10) nach Anspruch 7,
dadurch gekennzeichnet, daß die Leerlaufeinrichtung durch eine frei drehbare Walze (40) gebildet ist.

9. Rundballenpresse (10) nach einem der Ansprüche 1 - 6, dadurch gekennzeichnet, daß:
- die Umschlingungseinrichtungen (41) zwei mit Querabstand angeordnete Ketten aufweisen, die an mit Abstand voneinander angeordneten Stellen miteinander über querverlaufende Leisten verbunden sind, wobei die Ketten auf drehbar an der Heckklappe (18) befestigten Führungskettenrädern und auf Antriebskettenrädern gehaltert sind, die drehbar an dem Hauptrahmen (12) befestigt sind, und
- die Leerlaufeinrichtungen (40) durch zwei frei drehbare Leerlaufkettenräder gebildet sind, die auf der Schlittenbaugruppe (29) derart angeordnet sind, daß sie mit den Umschlingungsketten in Eingriff stehen.

## Revendications

1. Ramasseuse-presse à balles rondes (10) comportant :
- un châssis principal (12);
- une ridelle arrière (18) montée sur le châssis principal (12) en vue d'effectuer un mouvement de pivotment entre une position de formage de balle, fermée et une position de déchargement de balle, ouverte;
- une chambre de formage de balle (64) extensible entre des positions de démarrage de balle et de balle finie;
- un rouleau formant fond (28) monté mobile en rotation dans le châssis principal (12), d'une manière générale, au niveau de l'extrémité inférieure de la chambre de formage de balle (64);
- des moyens formant tapis (41) supportés d'une manière mobile sur des moyens d'entraînement (54) et sur plusieurs organes de guidage (44, 46, 48, 50, 52) qui sont montés mobiles en rotation dans le châssis principal (12) et la ridelle arrière (18); lesdits moyens formant tapis (41) comportant un brin intérieur (42a) extensible entre des positions de démarrage de balle et de balle finie;
- des moyens tendeurs de tapis (56, 60, 62) aptes à opérer pour tendre les moyens formant tapis (41); afin de solliciter le brin intérieur (42a) du tapis vers sa position de démarrage de balle, lorsque la chambre à balle (64) est vide, et de permettre audit brin intérieur (42a) du tapis de s'étendre jusqu'à sa position de balle finie, lorsqu'une balle (B) est en train d'être formée dans la chambre à balle (64); et
- un ensemble presseur (29) monté dans le châssis principal (12) en vue d'effectuer un mouvement de pivotement entre une postion de démarrage de balle, intérieure et une position de balle finie, extérieure; ledit ensemble presseur (29) portant au moins un cylindre (30, 32, 34) qui s'étend transversalement au châssis principal (12) et, au niveau de l'une de ses extrémités, des moyens formant cylindre libre (40) qui viennent en contract avec les moyens formant tapis (42), et ledit rouleau formant fond (28) et ledit ensemble presseur (29) définissant entre eux une bouche d'entrée (55) de la chambre à balle;
ladite ramasseuse-presse (10) étant caractérisée en ce que :
- dans la position de démarrage de balle, ladite chambre de formage de balle (64) se présente fondamentalement sous la forme d'un triangle sensiblement vertical, les moyens formant cylindre libre (40) étant positionnés, d'une manière générale, au niveau du sommet dudit triange dont l'un des côtes sensiblement vericaux est défini par ledit cylindre (30, 32, 34), et dont la base est définie, en partie, par ledit rouleau formant fond (28);
- le brin intérieur (42a) du tapis s'étend entre lesdits moyens formant cylindre libre (40) et l'un (52) desdits organes de guidage, qui lorsque la ridelle arrière (18) est dans la position fermée, est disposé à proximité, du rouleau formant (28); la conception étant telle que, dans la position de démarrage de balle, ledit brin intérieur (42a) du tapis coopère avec ledit cylindre (30, 32, 34) de l'ensemble presseur (29) pour former l'autre côté sensiblement vertical de ladite forme fondamentalement triangulaire, afin de délimiter entre eux la chambre de démarrage de balle (64); et
- les moyens formant tapis (41) et l'ensemble presseur (29) sont associés mutuellement d'une manière fonctionelle de telle façon que les moyens tendeurs de tapis (56, 60, 62) sont aptes, par l'intermédiaire desdits moyens formant tapis (41) et quand la chambre à balle (64) est vide, à opérer pour solliciter l'ensemble presseur (29) en direction de sa position de démarrage de balle et, pour permettre audit ensemble presseur (29) de s'étendre en direction de sa position de balle finie, lorsqu'une balle (B) est en train d'être formée dans la chambre à balle (64).

2. Ramasseuse-presse à balles rondes (10) selon la revendication 1, caractérisée en ce que l'ensemble presseur (29) porte de multiples cylindres mobiles en rotation (30, 32, 34) qui coopèrent avec le brin intérieur (42a) du tapis pour délimiter entre eux ladite chambre à balle (64).

3. Ramasseuse-presse à balles rondes (10) selon la revendication 1 ou 2, caractérisée en ce que les moyens forment cylindre libre (40) sont disposés en vue de venir en contact avec les moyens formant tapis (41) pour, pendant un déplacement de l'ensemble presseur (29) et des moyens forment tapis (41) des positions de démarrage de balle aux positions de balle finie et vice versa, maintenir lesdits moyens formant tapis (41) tout près dudit cylindre (30, 32, 34), respectivement du cylindre adjacent (34) desdits multiples cylindres (30, 32, 34).

4. Ramasseuse-presse à balles rondes (10) selon la revendication 3, caractérisée en ce que lesdits moyens forment tapis (41) passent entre, d'une part, lesdits moyens forment cylindre libre (40) et, d'autre part, ledit cylindre (30, 32, 34), respectivement ledit cylindre adjacent (34) desdits multiples cylindres (30, 32, 34).

5. Ramasseuse-presse a balles rondes (10) selon la revendication 3 ou 4, lorsqu'elle est dépendante de la revendication 2, caractérisée en ce que l'ensemble presseur (29) comporte deux bras (36) espacés l'un de l'autre transversalement qui sont montés pivotants dans le châssis de base (12) au niveau ou à proximité de premières extrémités correspondantes et qui portent entre eux d'une manière mobile en rotation lesdits multiples cylindres (30, 32, 34) disposes dans le sens de leur longuer suivant une configuration sensiblement arquée; lesdits bras (36) portant lesdits moyens forment cylindre libre (40) au niveau ou à proximité des extrémites opposées correspondantes.

6. Ramasseuse-presse à balles rondes (10) selon la revendication 5, caractérisée en ce que, pendant la formation d'une balle, les moyens forment cylindre libre (49) se déplacent suivant une trajectoire arquée orientée vers l'extérieur en entraînant avec eux lesdits moyens formant tapis (41).

7. Ramasseuse-presse à balles rondes (10) selon l'une quelconque des revendications précédentes, caractérisée en ce que les moyens formant tapis (41) comportent de multiples courroies (42) espacées les unes des autres transversalement et supportées sur des rouleaux de guidage (44, 46, 48, 50, 52) montés mobiles en rotation sur la ridelle arrière (18), et sur un rouleau d'entraînement (54) monté mobile en rotation sur le châssis principal (12).

8. Ramasseuse-presse à balles rondes (10) selon la revendication 7, caractérisée en ce que les moyens forment cylindre libre sont formés par un cylindre apte à tourner librement (40).

9. Ramasseuse-presse à balles rondes (10) selon l'une quelconque des revendications 1 à 6, caractérisée en ce que :
- les moyens forment tapis (41) comportent deux chaînes espacées l'une de l'autre transversalement qui, à des intervalles espacés, sont reliées entre elles par des lattes transversales; lesdites chaînes étant supportées sur des pignons de guidage montés mobiles en rotation sur la ridelle arrière (18), et sur des pignons d'entraînement montés mobiles en rotation sur le châssis principal (12), et
- les moyens forment cylindre libre (40) sont formés par deux pignons libres aptes à tourner librement, disposés sur l'ensemble presseur (29) pour être engrenés par les chaînes du tapis.
